Europäisches Patentamt

(19) European Patent Office

Office européen des brevets

(11) Numéro de publication: **0 306 429**
**A1**

# (12) DEMANDE DE BREVET EUROPEEN

(21) Numéro de dépôt: 88450034.9

(22) Date de dépôt: 16.08.88

(51) Int. Cl.⁴: **A 61 C 8/00**
A 61 C 13/225

(30) Priorité: 14.08.87 FR 8711659

(43) Date de publication de la demande:
08.03.89 Bulletin 89/10

(84) Etats contractants désignés:
AT BE CH DE ES FR GB GR IT LI LU NL SE

(71) Demandeur: **Servera, Claude, Dr.**
**Résidence Galaxie 1 Bis Rue Franklin**
**F-66000 Perpignan (FR)**

(72) Inventeur: **Servera, Claude, Dr.**
**Résidence Galaxie 1 Bis Rue Franklin**
**F-66000 Perpignan (FR)**

(74) Mandataire: **Ravina, Bernard**
**Cabinet Bernard RAVINA 24, boulevard Riquet**
**F-31000 Toulouse (FR)**

(54) Implant intra-osseux par exemple un implant dentaire.

(57) La présente invention a pour objet un implant intra-osseux par exemple un implant dentaire.

L'implant est constitué d'une base (1) sur laquelle est montée un fût (2) destiné à recevoir une supra-structure (3) porteuse d'une prothèse par exemple une prothèse dentaire et est destiné à se monter dans une loge (5) pratiquée dans le maxillaire.

Le dit implant est remarquable notamment en ce qu'il est pourvu de moyens de blocage aux zones corticales internes et externes du maxillaire et qu'il est pourvu autour du fût d'un élément (4) susceptible d'assurer une cicatrisation du type cal osseux.

Fig 1

EP 0 306 429 A1

Bundesdruckerei Berlin

**Description**

## IMPLANT INTRA-OSSEUX PAR EXEMPLE UN IMPLANT DENTAIRE

La présente invention a pour objet un implant intra-osseux par exemple un implant dentaire.

On sait que les implants dentaires sont destinés à être encastrés dans l'os maxillaire pour servir de support à une prothèse dentaire.

On connait divers types d'implants dentaires qui présentent tous l'inconvénient de n'être conçus que pour s'implanter dans la zone médullaire de l'os.

Il faut savoir que la zone médullaire est une zone spongieuse particulièrement tendre qui offre peu de résistance à la pénétration.

En raison de ses particularités, l'implant dentaire ne saurait être correctement immobilisé dans la zone médullaire.

De ce défaut, il en résulte à la longue, un déscellement de l'implant dentaire.

Cette tendance au déscellement sera d'autant plus marquée que l'implant offrira moins de surfaces susceptibles de s'opposer à son déplacement dans le maxillaire sous l'effet des efforts masticatoires et autres efforts fonctionnels qu'il subit.

Certains implants, en raison même de leur forme, par exemple les implants dits à lames, ont une tendance marquée à l'auto-forage et peuvent pénétrer plus que souhaité dans le maxillaire toujours sous l'effet des efforts masticatoires.

En raison de cet inconvénient, le type d'implant dentaire suséqoqué ne peut être fonctionnel et recevoir la prothèse qu'après une période relativement longue de stabilisation par voie cicatricielle de la zone médullaire.

Pour pallier à ces différents inconvénients, il a été proposé antérieurement un implant dentaire pourvu d'une base polygonale surmontée d'un support vertical de prothèse.

Un tel implant est destiné à être enserré dans une loge en forme de "T" inversé pratiquée latéralement dans le maxillaire.

En raison de la présence de la base, on peut espérer une meilleure tenue de l'implant dans le maxillaire, notamment dans le sens vertical.

Cependant, cet implant se trouve toujours inserré dans la zone médullaire, ce qui ne serait assurer une immobilisation optimale.

Il est nécessaire que la base présente un certain nombre d'aréoles de façon à ce que la reconstitution du tissu médullaire se fasse dans de bonnes conditions.

Cependant, la présence nécessaire d'aréoles a pour corrolaire une diminution de la surface de la base et donc un moindre maintien de l'implant dans le sens vertical.

La présente invention a pour objet de pallier aux inconvénients ci-dessus énoncés en mettant en oeuvre un nouveau type d'implant qui se fixe de façon rigide dans le maxillaire.

A cet effet, l'implant intra-osseux par exemple implant dentaire destiné à être disposé dans une loge pratiquée dans le maxillaire et comportant une base sur laquelle est monté un fût destiné à recevoir à l'extérieur de la loge une supra-structure porteuse d'une prothèse par exemple une prothèse dentaire, se caractérise essentiellement en ce qu'il est pourvu de moyens de blocage aux zones corticales de l'os.

Selon une autre caractéristique, les moyens de blocage aux zones corticales sont ménagés sur la base de l'implant.

Selon une autre caractéristique de l'invention, l'implant est doté autour du fût, à écartement de la base, d'un élément biocompatible en une matière apte à provoquer la formation d'un cal cicatriciel osseux, de préférence un madripore taillé au laser à structure ajourée.

Grâce à ces caractéristiques, l'implant intra-osseux peut être fermement immobilisé dans la loge et encaisser peu de temps après sa pose les efforts fonctionnels.

D'autres avantages et caractéristiques de l'invention apparaîtront à la lecture de la description d'une forme préférée de réalisation donnée à titre d'exemple non limitatif en se reférant aux dessins annexés en lesquels :

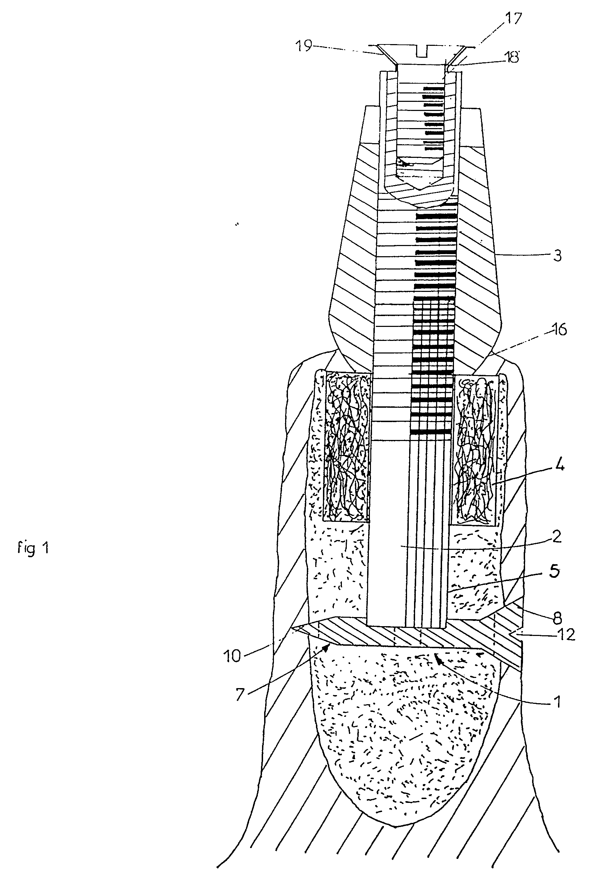

- la figure 1 est une vue en coupe longitudinale d'un implant disposé dans sa loge,

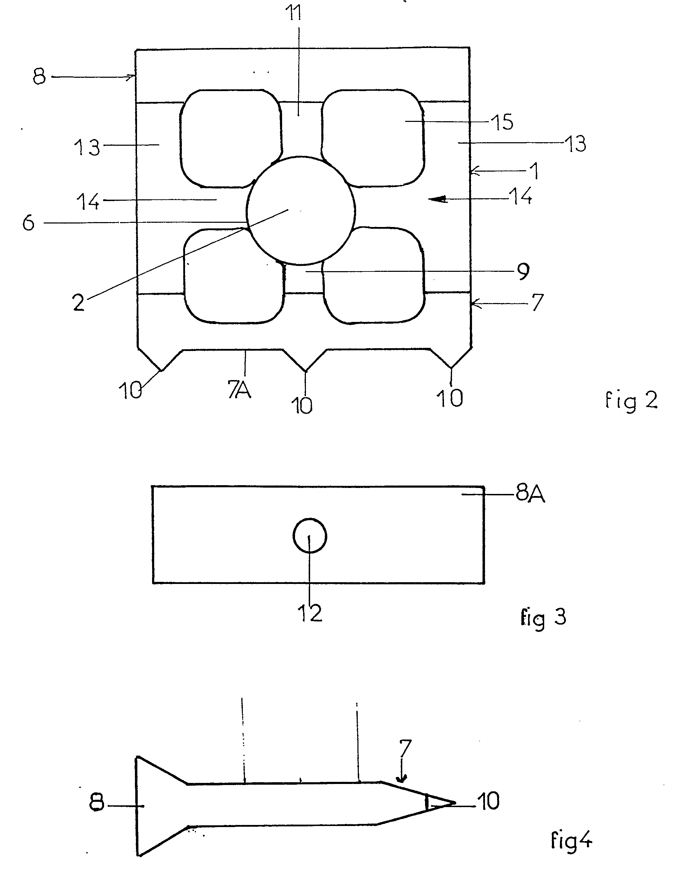

- la figure 2 est une vue de dessus de la base de l'implant,
- la figure 3 est une vue arrière en plan de l'implant,
- la figure 4 est une vue latérale de la base de l'implant,

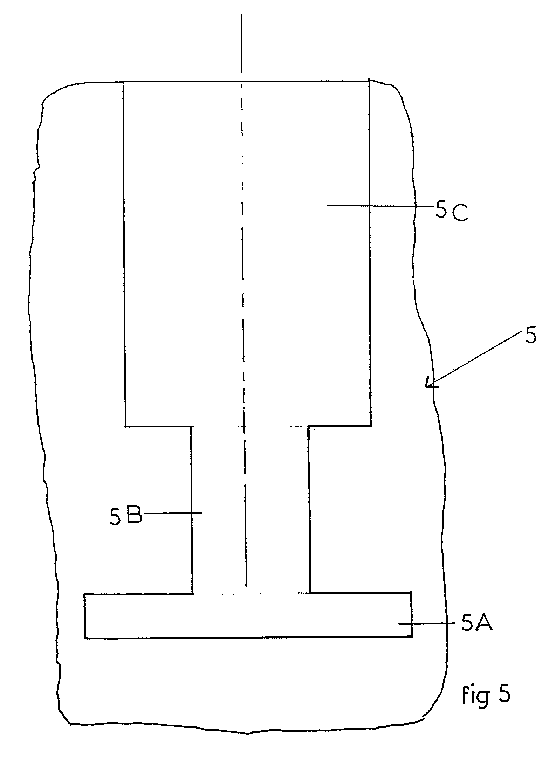

- la figure 5 est une coupe longitudinale de la loge.

Tel que représenté, l'implant intra-osseux selon l'invention par exemple un implant dentaire constitué en matériau bio-compatible comprend une base 1 qui porte un fût 2 qui reçoit en extrémité supérieure une supra-structure 3 porteuse d'une prothèse dentaire.

Ce type d'implant est destiné à être introduit dans une loge 5 de profil correspondant, ménagée dans l'os maxillaire.

Cette loge comprend une saignée horizontale 5A débouchant sur la face latérale externe du maxillaire et une saignée verticale débouchant dans la précédente, dans la face latérale externe de l'os maxillaire et dans la crête supérieure.

L'implant est engagé dans la loge par mouvement latéral par rapport au maxillaire.

La base de l'implant vient se loger dans la saignée horizontale ( à dimensions variables) tandis que le fût ( à diamètre constant) est reçu par la saignée verticale.

La base 1 est entièrement noyée dans la saignée horizontale.

Le fût 2 présente une longueur suffisante de façon à ce que son extrémité supérieure puisse être en saillie sur la crête supérieure du maxillaire et recevoir au-dessus de cette dernière la supra-structure 3, amovible grâce à son vissage.

Conformément à l'invention, l'implant est pourvu de moyens de blocage aux zones corticales internes et externes du maxillaire, ce qui permet une fixation sur les parties les plus dures et les plus rigides de l'os et donc assure une excellente tenue de l'implant. Ainsi ce dernier pourra encaisser très peu de temps après sa pose les efforts fonctionnels.

Selon la forme préférée de réalisation, les moyens de blocage sont ménagés sur la base de l'implant.

Avantageusement, au moins un élément 4 en un matériau bio-compatible susceptible d'assurer la formation d'un cal cicatriciel osseux est monté dans la saignée verticale, autour de fût, à écartement de la base. Ainsi, la zone médullaire autour de cet élément ainsi que ce dernier sont transformés en cal osseux.

De par le blocage de la base dans la saignée horizontale 5a, et de par la formation du cal osseux autour du fût, l'implant sera immobilisé dans l'os maxillaire suivant toutes les directions. De préférence, l'élément 4 bio-compatible est un élément étranger au corps humain.

Préférentiellement, l'élément 4 est constitué en carbonate de calcium par exemple d'origine madriporaire à structure ajourée mais il est bien évident qu'il pourra être constitué en toute autre matière adaptée.

Selon la forme préférée de réalisation, la base 1 de l'implant comprend une partie centrale 6 en avant de laquelle, en considérant le sens d'introduction dans la loge, est raccordé un nez 7 effilé et en arrière de laquelle est raccordé un talon 8 en forme de coin, le nez et le talon constituant les moyens de blocage aux corticales internes et externes.

A la partie centrale de la base est également raccordé le fût 2, ce dernier s'étendant suivant un axe transversal au plan de la base.

De préférence, l'axe du fût est orthogonal au plan de la base.

Le nez 7 et le talon 8 sont respectivement destinés, par mouvement d'enfoncement dans la saignée horizontale de la loge, à venir s'enficher dans la zone corticale interne et à se coincer dans la zone corticale externe.

Suivant l'exemple préférentiel de réalisation, le nez 7 de la base est constitué par une lame.

Cette lame se développe suivant le plan de la base et présente un bord avant 7A longitudinal transversal au sens de pénétration dans la saignée horizontale. La lame est liée à la partie centrale de la base par une nervure avant 9, cette dernière s'étendant dans le plan de la base, et suivant la direction de pénétration dans la saignée horizontale de la loge 5.

La lame 7 présente une épaisseur décroissante depuis son bord longitudinal arrière vers son bord longitudinal avant.

La lame s'étend de manière égale de part et d'autre de la nervure 9.

Préférentiellement, la lame est prolongée vers l'avant par au moins une dent 10 en pointe destinée à venir s'enficher dans la corticale interne, la dite dent étant en saillie sur le bord avant 7A.

Selon l'exemple préférée de réalisation, la lame présente trois dents en pointe 10 régulièrement espacées le long de son bord longitudinal avant 7A.

Toujours selon la forme préférée, une de ces dents 10 est disposée dans l'axe de la nervure avant 9, les deux autres sont disposées respectivement à une extrémité et à l'autre de ce bord. Avantageusement, ce bord longitudinal 7A est tranchant, de façon à ce que la lame puisse également pénétrer dans la corticale interne.

Le talon 8 de la base se développe parallèlement à la lame et est lié à la partie centrale par nervure arrière 11.

Cette nervure est dans le prolongement de la nervure avant 9 et est située dans le plan de la base. Le talon 8 se développe de manière égale de part et d'autre de la nervure arrière.

Ce talon 8 présente une épaisseur croissante depuis sa face avant vers sa face arrière 8A de manière à former un coin destiné à venir se coincer dans la saignée horizontale au niveau de la zone corticale externe.

Le talon 8 présente de plus une section droite constante suivant toute sa longueur.

Préférentiellement, cette section droite épouse le contour d'un trapèze isocèle.

La grande base de ce trapèze correspond à la face arrière du talon.

Cette face arrière est perpendiculaire au plan général de la base.

Dans l'axe des nervures 9 et 11, cette face arrière 8A présente un orifice borgne 12 qui est destiné à recevoir l'extrémité d'un pointeau utilisé pour frapper la base et la bloquer dans la saignée horizontale.

Préférentiellement, la base telle que décrite comporte deux traverses 13 parallèles à l'axe des nervures avant et arrière et disposées symétriquement par rapport à cet axe.

Chaque traverse lie une des extrémités de la lame à l'extrémité correspondante du talon.

De plus, chaque traverse 13 est raccordée à la partie centrale 6 par une nervure transversale 14. Préférentiellement, cette nervure 14 s'étend perpendiculairement à l'axe des nervures avant et arrière.

Préférentiellement, la lame 7 et les traverses 13 et le talon 8 sont disposés suivant les côtés d'un carré dont le centre est occupé par la partie médiane 6. Les nervures 9, 11 et 14 sont disposées suivant les médianes du carré.

Il est à noter que les traverses et les nervures sont de faible largeur de façon à ce que les quatre aréoles 15 délimitées par ces dernières soient le plus large possible, ce qui permet d'assurer une bonne interpénétration de la zone médullaire.

Le fût 2 de forme cylindrique présente une hauteur suffisante pour que sa partie supérieure puisse se trouver au-dessus de la face supérieure du maxillaire et recevoir la supra-structure 3. La hauteur du fût peut être ajustée lors de la pose par le praticien qui sectionne la longueur en excès.

De préférence, la partie supérieure du fût est filetée pour coopérer en vissage avec un taraudage axial de la supra-structure 3.

Cette supra-structure 3 par vissage vient porter contre l'élément 4 disposé autour du fût.

Selon la forme prérérée de réalisation, cet élément 4 est de forme cylindrique et est pourvu suivant son axe d'un perçage cylindrique de façon à venir s'emmancher sur le fût.

L'élément 4 ou manchon est introduit dans un forage vertical 5C de diamètre supérieur à la largeur de la saignée verticale pratiqué dans la dite saignée depuis la face supérieure du maxillaire, à une profondeur plus ou moins prononcée.

Le fond du forage est écarté en hauteur de la saignée horizontale de façon à ce qu'il subsiste toujours une couche de tissu médullaire entre la base de l'implant et l'extrémité inférieure de l'élement 4.

Sous l'effet du vissage de la supra-structure, l'élément 4 est comprimé entre cette dernière et la couche de tissus médullaire. En venant en appui contre la face supérieure de l'élément 4, la supra-structure engendre un effort de traction vers le haut sur le fût 2 et sur la base 1, ce qui améliore encore l'ancrage de cette dernière dans les corticales interne et externe.

Il est à noter que la face supérieure de l'élément 4 est située en-dessous du niveau de la face du maxillaire de façon à ce qu'il puisse être enfoui sous la muqueuse.

La supra-structure 3 ou moignon se présente sous las forme d'un tronc de cône.
Ce cône est traversé axialement de part en part par l'orifice taraudé.
Le moignon se monte sur le fût de façon à ce que la grande base vienne au contact de l'élément 4.

Avantageusement, au niveau de sa grande base, le moignon ou supra structure est chamfreiné en arc-de-cercle.
La forme rentrante 16 donnée au moignon au niveau de sa grande base évite toute rétention alimentaire autour de cette dernière et donc toute fermentation.
Sur le moignon est manchonné la prothèse dentaire qui présente à cet effet un logement axial de forme complémentaire.
Préférentiellement, l'angle au sommet du tronc de cône est inférieur à 20° et est de préférence égal à 15°.

Préférentiellement, la prothèse est également fixée au fût par une vis 17.
A cet effet, le fût en partie supérieure, est pourvu d'un taraudage axial.

Avantageusement, la vis de fixation 17 présente une tête fraisée. Cette tête fraisée est destinée à être noyée dans un embrèvement 18 pratiqué dans une collerette 19 noyée dans la prothèse. Par vissage de la vis, la prothèse est fermement appliquée contre le moignon conique.
En raison de la faible conicité, il est réalisé un blocage par adhérence de la prothèse sur le moignon 3.

De préférence, le pas du filet de la vis est différent du pas du filetage du fût.

De plus, afin d'interdire toute rotation accidentelle de la prothèse par rapport au moignon, l'extrémité de ce dernier est équipée d'une fente diamètrale dans laquelle s'engage une forme complémentaire en saillie sur le fond du logement conique de la prothèse.

En raison de la fixation de la base dans les parties dures du maxillaire et de la présence de l'élément 4 autour du fût, l'implant dentaire tel que décrit est encastré dans l'os et ne peut se desceller sous l'effet des efforts fonctionnels.

Il va de soi que la présente invention peut recevoir tous aménagements et toutes variantes sans pour autant sortir du cadre du présent brevet.

**Revendications**

R1/ Implant intra-osseux par exemple implant dentaire comportant une base (1) sur laquelle est montée un fût (2) destiné à recevoir une supra-structure (3) porteuse d'une prothèse par exemple une prothèse dentaire, le dit implant étant destiné à se monter dans une loge (5) pratiquée dans le maxillaire, caractérisé en ce qu'il est pourvu de moyens de blocage aux zones corticales internes et externes.

R2/ Implant intra-osseux selon la revendication 1 caractérisé en ce que les moyens de blocage aux corticales interne et externe sont ménagés sur la base (1).

R3/ Implant intra-osseux selon la revendication 1 caractérisé en ce que autour du fût est disposé un élément 4 en un matériau biocompatible apte à provoquer la formation d'un cal cicatriciel osseux.

R4/ Implant selon la revendication 1 caractérisé en ce que la base (1) comprend une partie centrale (6) portant le fût (2), en avant de laquelle est raccordé un nez (7) éffilé et en arrière de laquelle est raccordé un talon (8) en forme de coin, le dit nez et le dit talon constituant les moyens de blocage et étant respectivement destinés à s'enficher dans la corticale interne et à se coincer dans la zone corticale externe.

R5/ Implant selon la revendication 4 caractérisé en ce que le nez (7) est constitué par une lame transversale à la direction de pénétration dans la saignée horizontale (5A) et que la dite lame est liée à la partie médiane (6) par une nervure avant (9), qui s'étend suivant la direction de pénétration dans la saignée horizontale (5A).

R6/ Implant selon la revendication 5 caractérisé en ce que la lame constituant le nez (7), est prolongée vers l'avant par au moins une dent (10) en forme de pointe.

R7/ Implant selon la revendication 4 caractérisé en ce que le talon (8) se développe transversalement au sens d'introduction de la base dans la saignée et que ce talon est lié à la partie médiane (6) par une nervure arrière (11) s'étendant suivant la direction d'introduction dans la saignée.

R8/ Implant selon la revendication 7 caractérisé en ce que le talon présente une épaisseur croissante depuis sa face avant vers sa face arrière (8A).

R9/ Implant selon la revendication 8 caractérisé en ce que le talon présente une section droite en trapèze isocèle, la grande base de cette section correspondant à la face arrière (8A).

R10/ Implant selon les revendications 7, 8 et 9 caractérisé en ce que la face arrière (8A) présente un orifice borgne (12) situé dans l'axe des nervures (9) et (11).

R11/ Implant selon la revendication 4 caractérisé en ce que la base présente deux traverses (13) parallèles à l'axe des nervures (9) et (11), disposées symétriquement par rapport à cet axe, liant chacune l'extrémité de la lame formant le nez à l'extrémité correspondante du talon.

R12/ Implant selon la revendication 11 caractérisé en ce que chaque traverse est raccordée à la partie médiane (6) par une nervure transversale (14).

R13/ Implant selon les revendications 5, 7, 11 et 12 caractérisé en ce que la lame constituant le nez (7), le talon (8) et les traverses(13) sont disposés suivant les côtés d'un carré dont le centre est occupé par la partie médiane, les nervures (9), (11) et (14) étant disposées suivant les médianes de ce carré.

R14/ Implant selon la revendication 3 caractérisé en ce que l'élément (4) est en carbonate de calcium.

R15/ Implant selon la revendication 3 caractérisé en ce que l'élément (4) est écarté de la base (1).

R16/ Implant selon la revendication 3 caractérisé en ce que l'élément (4) est de forme cylindrique et est pourvu d'un orifice cylindrique axial pour s'emmancher sur le fût (2).

R17/ Implant selon la revendication 3 et la revendication 15 caractérisé en ce que l'élément 4 est maintenu écarté de la base (1) par une couche de tissu médullaire.

R18/ Implant selon la revendication 1 et la revendication 17 caractérisé en ce que l'élément (4) est comprimé entre la couche de tissu médullaire et la supra-structure (3).

R19/ Implant selon la revendication 1 caractérisé en ce que le fût est fileté en partie supérieure at coopère en vissage avec un orifice taraudé, transversant de part en part la supra structure (3).

R20/ Implant selon la revendication 1 caractérisé en ce que la supra-structure (3) ou moignon se présente sous la forme d'un tronc de cône, la grande base de ce tronc de cône venant en appui sur l'élément (4).

R21/ Implant selon la revendication 15 caractérisé en ce que le moignon présente au niveau de sa grande base un chamfrein en arc-de-cercle (16).

R22/ Implant selon la revendication 1 caractérisé en ce que le fût est équipé en partie supérieure d'un orifice taraudé, borgne, axial, destiné à recevoir la vis de fixation de la prothèse sur le moignon (3).

R23/ Implant selon la revendication 1 caractérisé en ce qu'il est monté dans une loge (5) constituée:
-par une saignée horizontale (5A) destinée la base (1),
-par une saignée verticale (5B), débouchant dans la saignée (5A), destinée à recevoir le fût,
-et par un forage pratiqué dans la saignée verticale, destiné à recevoir l'élément (4), le dit forage étant d'un dia metre supèrieur à la largeur de la saignée verticale et son fond étant écarté de la saignée horizontale par une couche de tissu médullaire.

fig 1

fig 2

fig 3

fig4

fig 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 302 715  (B.J. CLUNET COSTE et al.)<br>* En entier * | 1-3,5,<br>11-13,<br>19-23 | A 61 C   8/00<br>A 61 C  13/225 |
| Y | | 14-18 | |
| | --- | | |
| Y | DE-B-1 042 835  (W. RAUSCHER)<br>* Colonne 2, ligne 26 - colonne 3, ligne 24; figures * | 14-18 | |
| | --- | | |
| A | US-A-4 522 596  (L. ASHKINAZY)<br>* Colonne 6, lignes 14-30; figure 4 * | 4,6 | |
| | --- | | |
| A | FR-A-2 188 445  (J.M. JUILLET)<br>* Figure 3 *<br>----- | 1,7 | |

| | DOMAINES TECHNIQUES RECHERCHES (Int. Cl.4) |
|---|---|
| | A 61 C |

Le présent rapport a été établi pour toutes les revendications

| Lieu de la recherche | Date d'achèvement de la recherche | Examinateur |
|---|---|---|
| LA HAYE | 18-10-1988 | EHRSAM F.J.A. |